# FASCICULE DE BREVET EUROPEEN

(11) **EP 3 693 644 B1**
(45) Date de publication et mention de la délivrance du brevet: **24.08.2022**
(21) Numéro de dépôt: 20156086.9
(22) Date de dépôt: 07.02.2020
(51) Int. Cl.: F16K 39/04, F16K 3/18, F16K 3/22

(54) **VANNE DE REGULATION D'UN FLUX DE FLUIDE EQUIPEE D'UN VOLET CONIQUE ET SYSTEME COMPRENANT UNE TELLE VANNE**
REGULIERUNGSVENTIL FÜR FLÜSSIGKEITSFLUSS, DAS MIT EINER KONISCHEN KLAPPE AUSGESTATTET IST, UND EIN SOLCHES VENTIL UMFASSENDES SYSTEM
CONTROL VALVE OF A STREAM OF FLUID PROVIDED WITH A CONICAL SHUTTER AND SYSTEM COMPRISING SUCH A VALVE

(30) Priorité: 08.02.2019 FR 1901253
(43) Date de publication de la demande: 12.08.2020
(73) Titulaire: Liebherr-Aerospace Toulouse SAS, 31200 Toulouse (FR)
(72) Inventeur: LAFOND, Eric, 31016 TOULOUSE Cedex 2 (FR); ARNAUD, Adrien, 31016 TOULOUSE Cedex 2 (FR); WOJCIESZONAK, Rémi, 31016 TOULOUSE Cedex 2 (FR)
(74) Mandataire: Bringer IP

(56) Documents cités:
- EP-A1- 0 467 946
- EP-B1- 0 467 946
- GB-A- 288 403
- US-A- 1 956 101
- US-A- 3 421 544
- US-A1- 2011 233 436
- US-A1- 2015 122 340
- US-B1- 8 678 762

## Description

### Domaine technique de l'invention

L'invention concerne une vanne de régulation d'un flux de fluide, notamment d'un flux d'air. L'invention concerne en particulier une vanne de régulation d'un flux de fluide de forme conique. L'invention concerne également un système de conditionnement d'air d'une cabine d'un aéronef et un système de ventilation comprenant une telle vanne.

### Arrière-plan technologique

Un système de conditionnement d'air d'une cabine d'un aéronef comprend en général un dispositif de prélèvement d'air comprimé sur au moins un compresseur d'un moteur de propulsion de l'aéronef (ou un dispositif de prélèvement d'air relié à une écope de l'aéronef) et une turbomachine à cycle à air comprenant au moins un compresseur et une turbine, le compresseur étant alimenté en air par le dispositif de prélèvement d'air comprimé, et la turbine comprenant une sortie d'air alimentant la cabine en température et débit contrôlés. Le système de conditionnement d'air comprend également différents échangeurs de chaleur, vannes de régulation et une boucle d'extraction d'eau.

Une vanne de régulation d'un flux de fluide est destinée à contrôler le débit d'air circulant dans la conduite de circulation d'air équipée de cette vanne de régulation.

Une telle vanne peut être notamment utilisée dans les systèmes de conditionnement d'air pour réguler les flux d'air dans les cabines d'aéronefs ou dans les systèmes de ventilation d'air des moteurs d'aéronefs.

Aussi, il est nécessaire d'utiliser une vanne qui présente une structure permettant d'avoir une section de passage autorisant la circulation d'air tout en assurant une étanchéité optimale pour éviter les fuites d'air.

Pour répondre à ces deux contraintes, l'une des solutions mises en œuvre actuellement est d'utiliser une vanne de type papillon qui présente un organe d'obturation sous la forme d'un clapet adapté pour permettre l'ouverture et la fermeture de l'organe d'obturation. L'organe d'obturation est monté sur un axe perpendiculaire au flux et traverse le corps de vanne de manière à être relié mécaniquement à un actionneur par exemple agencé à l'extérieur de la vanne pour pouvoir commander l'organe d'obturation. Etant donné que l'axe du papillon traverse le corps de vanne, cela implique de déployer des moyens complexes pour gérer les éventuelles fuites au niveau du palier de cet axe. La plupart du temps ces vannes sont commandées par un actionneur électrique, électropneumatique, pneumatique ou hydraulique qui permet le déplacement de l'organe d'obturation pour réguler le flux d'air.

Le débit de fluide circulant dans la vanne peut être important. Pour cela, il est connu d'utiliser une vanne de type papillon afin de permettre le passage de fluide avec un débit et une pression élevés. Cependant, ce type de vanne comprend d'une part un papillon permettant d'obtenir une section d'ouverture en demi-lune, la circulation du fluide est donc perturbée par la présence du papillon. D'autre part, le déplacement du papillon ne peut pas être obtenu rapidement et donc la variation de la section de passage du fluide est ralentie.

Une autre solution pourrait être d'utiliser une vanne à volet axial présentant un axe de rotation dans l'axe du flux de fluide. Cependant, au vu de la difficulté à actionner un tel volet axial, ce type ne vanne est peu répandu.

A ce titre, l'invention vise à obtenir une vanne de régulation présentant une section de passage de fluide équivalente à celle d'une vanne papillon tout en permettant une variation de la section de passage du fluide et en assurant l'étanchéité complète de la vanne.

Le document US3421544 divulgue une vanne de régulation d'un flux de fluide connue.

### Objectifs de l'invention

L'invention vise à fournir une vanne de régulation d'un flux de fluide, notamment d'un flux d'air, qui pallie au moins certains des inconvénients des solutions connues.

L'invention vise en particulier une vanne de régulation de flux de fluide permettant d'obtenir une section de passage équivalente à une section de passage obtenue avec une vanne papillon dans le canal de circulation d'une vanne.

L'invention vise également à fournir une vanne de régulation d'un flux de fluide dont l'étanchéité est améliorée.

L'invention vise également à fournir, dans au moins un mode de réalisation, une vanne de régulation d'un flux de fluide permettant la variation rapide de la section de passage du fluide circulant dans le canal de circulation.

L'invention vise également à fournir, dans au moins un mode de réalisation, une vanne de régulation d'un flux de fluide dont l'actionnement de ladite vanne se fait sans contact.

L'invention vise aussi à fournir un système de conditionnement d'air équipé d'une vanne de régulation selon l'invention.

L'invention vise aussi à fournir un système de ventilation équipé d'une vanne de régulation selon l'invention.

L'invention vise enfin à fournir un véhicule de transport aérien ou ferroviaire équipé d'un système de conditionnement d'air ou d'un système de ventilation selon l'invention.

### Exposé de l'invention

Pour ce faire, l'invention concerne une vanne de régulation d'un flux de fluide comprenant :
- un corps de vanne comprenant une entrée de fluide, une sortie de fluide, un canal de circulation de fluide qui s'étend selon une direction, dite direction axiale, entre ladite entrée de fluide et ladite sortie de fluide,
- un organe d'obturation agencé dans ledit canal de circulation de fluide et configuré pour pouvoir passer d'une position ouverte autorisant la circulation de fluide dans ledit canal de circulation entre l'entrée de fluide et la sortie de fluide ou inversement, à une position fermée empêchant la circulation de fluide dans le canal de circulation entre l'entrée de fluide et la sortie de fluide ou inversement,
- un actionneur dudit organe d'obturation adapté pour pouvoir commander la position dudit organe d'obturation dans ledit canal de circulation de fluide.
- un support fixe conique solidaire du corps de vanne et présentant un sommet orienté vers ladite entrée de fluide dudit corps de vanne,
   - un volet conique conjugué mobile en rotation par rapport au support fixe et présentant un sommet orienté vers ladite entrée de fluide dudit corps de vanne,
- au moins une lumière de passage de fluide agencée dans ledit volet conique et au moins une lumière de passage de fluide conjuguée agencée dans ledit support fixe de manière à permettre la circulation de fluide à travers ledit organe d'obturation lorsque lesdites lumières sont en regard l'une de l'autre et définissant ladite position ouverte,
- un joint d'étanchéité agencé axialement entre ledit volet conique et ledit support fixe conique, et
- des moyens de déplacement axial spontané du volet conique contre le support fixe qui comprennent au moins un ressort configuré pour permettre de maintenir le volet conique à distance du support fixe lorsque ledit organe d'obturation est dans ladite position ouverte ou dans une position intermédiaire et d'être comprimé lorsque ledit organe d'obturation est dans ladite position fermée de manière à permettre un déplacement axial dudit volet qui comprime ledit joint d'étanchéité.

La vanne selon l'invention présente donc la particularité de mettre en œuvre un organe d'obturation présentant un volet conique monté mobile sur un support fixe conique conjugué comprenant chacun des lumières de passage de fluide de manière à pouvoir présenter des sections de passage de fluide équivalentes à celles d'une vanne papillon. De plus, ces sections de passage permettent de linéariser la circulation d'un fluide dans ledit canal de circulation. Pour ce faire, le volet conique monté mobile en rotation sur son support fixe et le support fixe sont tous les deux formés d'une paroi de forme conique traversée par des lumières de passage de fluide.

En d'autres termes, l'organe d'obturation de forme conique présente un sommet orienté vers l'entrée du fluide dudit corps de vanne, de sorte que le fluide entrant par l'entrée de fluide traverse d'abord les lumières du volet conique puis les lumières du support fixe avant de sortir par la sortie de fluide dudit corps de vanne, lorsque l'organe d'obturation est en position ouverte.

L'invention est décrite dans tout le texte en considérant que le fluide traverse la vanne d'amont en aval de ladite entrée de fluide vers ladite sortie de fluide. Cela étant, rien n'empêche d'utiliser la vanne selon l'invention en prévoyant de l'alimenter en fluide par ladite sortie de fluide de sorte que le fluide sort de la vanne, après avoir traversé l'organe d'obturation, par ladite entrée de fluide. En d'autres termes, la vanne selon l'invention peut être bidirectionnelle et ladite entrée de fluide et ladite sortie de fluide peuvent, selon les applications former une entrée ou une sortie effective de fluide.

De préférence, lorsque le fluide sort de la vanne, après avoir traversé l'organe d'obturation, par ladite entrée de fluide, le volet est monté sur le support de sorte que le fluide entrant par la sortie de fluide traverse d'abord les lumières du volet conique puis les lumières du support fixe avant de sortir par l'entrée de fluide dudit corps de vanne, lorsque l'organe d'obturation est dans la position ouverte.

La régulation du fluide par la vanne selon l'invention est permise par la présence d'un organe d'obturation qui présente au moins une première position, dite position ouverte, autorisant la circulation du fluide de l'entrée vers la sortie de fluide du corps de vanne (ou inversement), et au moins une deuxième position, dite position fermée, dans laquelle l'organe d'obturation empêche la circulation du fluide dans le canal de circulation entre l'entrée de fluide et la sortie de fluide (ou inversement).

Dans la position, dite position ouverte, la circulation du fluide à travers les lumières de passage de fluide peut être maximale. Dans la position, dite position fermée, le fluide est bloqué par les parois respectives du volet conique et du support fixe ce qui empêche toute circulation de fluide à travers l'organe d'obturation.

Ledit volet conique et ledit support fixe sont respectivement formés d'une paroi dans laquelle des lumières de passage sont ménagées. Ainsi, les lumières définissent la section de passage au travers de laquelle le fluide peut circuler et les parois définissent un moyen d'entraver la libre circulation du fluide. Lorsque les parois du volet conique obstruent les lumières de passage de fluide du support fixe, le passage de fluide est bloqué dans le canal de circulation de fluide.

Toutes les positions intermédiaires permettent de réguler le débit de fluide à l'intérieur du canal de circulation de fluide.

Lorsque les lumières de passage sont partiellement mises en regard les unes des autres, des sections de passage partielles sont formées, ce qui permet de contrôler le débit de fluide entre l'entrée de fluide et la sortie de fluide (ou inversement). Ces positions correspondent aux positions intermédiaires de l'organe d'obturation.

Les lumières de passage agencées respectivement sur ledit volet conique et sur ledit support fixe présentent une structure particulière adaptée à la forme conique. La mise en regard des lumières respectives du volet conique et du support fixe permet de libérer une section de passage axialo-radiale à travers laquelle le fluide peut circuler librement lorsque l'organe d'obturation est dans la position ouverte ou une position intermédiaire.

En d'autres termes, la configuration conique de l'organe d'obturation permet de définir des sections de passages de fluide équivalentes à celles d'une vanne papillon et permet donc de générer une circulation de fluide davantage linéaire (par rapport au papillon), notamment lorsque le débit est important. Le fluide circule ainsi de manière globalement linéaire sans être dévié vers l'axe de la vanne.

En outre, les sections de passage de fluide formées par les lumières de l'organe d'obturation peuvent présenter différentes formes géométriques. De préférence, les sections de passage ont une forme triangulaire, plus précisément un triangle isocèle avec le sommet orienté vers l'entrée du fluide du corps de vanne.

Le pilotage de l'ouverture/fermeture de l'organe d'obturation et par conséquent de la mise en regard des lumières de passage desdits volet et support conjugués permet de réguler le débit du flux qui traverse la vanne.

La vanne selon l'invention permet également avantageusement de définir une position de sécurité de la vanne. Pour ce faire, la géométrie du volet conique peut être définie de manière à pouvoir créer un couple de rotation aérodynamique qui entraine le basculement spontané dudit volet dans une position préférentielle, dite position de sécurité, en l'absence d'une commande de l'actionneur. Cette position de sécurité peut correspondre, selon les applications, à la position ouverte, la position fermée ou toute position intermédiaire. Cette variante avantageuse permet de garantir, simplement par la géométrie du volet conique, que le volet se déplace spontanément vers la position de sécurité, lorsqu'un problème telle qu'une panne de l'actionneur dudit volet conique survient.

Selon l'invention, l'actionneur est configuré pour permettre le déplacement de l'organe d'obturation et donc la régulation du débit de fluide. Cet actionneur peut lui-même être piloté par une unité de commande configurée pour imposer la position de l'organe d'obturation dans le canal de circulation de fluide.

Selon l'invention, l'étanchéité de ladite vanne de régulation est assurée par un joint d'étanchéité et des moyens de déplacement axial spontané du volet conique contre le support fixe conique. Le joint d'étanchéité est agencé entre le volet conique et le support fixe et s'étend du sommet du support fixe à son extrémité distale solidaire du corps de vanne.

Par conséquent, lorsque l'organe d'obturation est dans la position fermée, le fluide exerce une force contre ledit volet conique qui entraine son plaquage contre ledit support fixe, sur lequel il est monté, et contraint ainsi le volet à être fixement maintenu contre ledit support, améliorant ainsi l'étanchéité de l'organe d'obturation.

Selon une variante de l'invention, le joint peut être directement fixé sur les parois du support fixe. Selon une autre variante de l'invention, il peut être fixé sur les parois du volet conique. De préférence, le joint est fixé sur les parois du support pour rester fixe lors de la rotation du volet et éviter d'être mis en mouvement. Les moyens de déplacement axial du volet comprennent au moins un ressort solidaire du volet qui présente une certaine raideur déterminée afin de garantir le déplacement axial nécessaire pour permettre de maintenir le volet conique à distance du support fixe lorsque l'organe d'obturation est dans ladite position ouverte ou dans une position intermédiaire et pour assurer la compression dudit joint entre le volet et le support lorsque ledit organe d'obturation est dans ladite position fermée. Lors de la rotation du volet, la présence du ressort permet de créer un espacement entre le volet et le support pour éviter le frottement du joint d'étanchéité lors de la rotation du volet. Cet espacement permet également d'éviter la friction du volet contre le joint et par conséquent de protéger le joint d'une usure accélérée.

Lors de la rotation du volet conique de la position ouverte à la position fermée, en passant pas une position intermédiaire, le volet est soumis progressivement à la pression aérodynamique du fluide traversant les lumières du volet et appuyant sur les parois du volet conique.

En position fermée, le flux de fluide exerce une force contre le volet ce qui provoque le déplacement axial du volet contre son support et assure la compression du joint d'étanchéité.

L'actionneur de l'organe d'obturation contraint donc le volet à vaincre le frottement provoqué par le joint qui se transforme en couple résistant.

Pour limiter la résistance du couple, des moyens de déplacement axial spontané du volet conique contre le support fixe permettent d'assurer l'étanchéité complète et axiale lorsque le volet est en position fermée. Ces moyens sont solidarisés au volet au niveau de l'extrémité distale du volet.

En outre, l'espacement prévu entre le volet et le support permet de faciliter la rotation du volet par rapport au support. Le joint logé dans cet espacement subit une compression atténuée lors de la rotation ce qui entraine une diminution des frottements. Par conséquent, le joint d'étanchéité n'est pas comprimé ou peu comprimé et améliore la rotation du volet lors du passage de la position fermée à la position ouverte et inversement.

Une vanne selon l'invention peut être mise en œuvre pour assurer la régulation de tout type de fluide, notamment de l'air, de l'huile, du carburant, et de manière générale tout type de fluide dont le débit doit être contrôlé, par exemple au sein d'une application aéronautique, ferroviaire ou automobile.

Avantageusement et selon l'invention, ledit volet conique et ledit support fixe comprennent chacun respectivement un nombre impair de lumières de passage de fluide régulièrement réparties.

Un nombre impair de lumières de passage de fluide permet d'améliorer la répartition des efforts et de limiter les efforts antagonistes exercés par le flux de fluide sur le volet et le support.

Les lumières de passage sont de préférence régulièrement réparties sur ledit volet et ledit support pour permettre un passage de fluide homogène dans le canal de circulation.

Selon cette variante, les lumières de passage dudit volet et dudit support sont agencées de manière uniforme et identique sur le volet et le support conjugués.

Le nombre de lumières de passage de fluide peut être quelconque. Rien n'empêche par exemple de prévoir un organe d'obturation muni d'une seule lumière ou de N lumières, où N est entier quelconque prédéterminé, de préférence supérieur ou égal à 3, par exemple 5. L'intervalle dans lequel peut circuler un fluide définit la plage angulaire des lumières.

Selon cette variante, lesdites lumières sont au nombre de 5 de sorte que la plage angulaire des lumières forme un angle de 36°.

Avantageusement et selon l'invention, ladite vanne présente en outre au moins un axe de symétrie qui s'étend le long de la direction axiale à partir dudit sommet du support fixe et un angle α définissant une inclinaison desdites lumières du volet conique et du support fixe par rapport audit axe de symétrie de la vanne, ledit angle α étant inférieur ou égal à 30°.

Selon cette variante, l'inclinaison desdites lumières axialo-radiales permet au fluide de traverser l'organe d'obturation de manière globalement linéaire. En d'autres termes, le fluide circulant dans le canal de circulation est peu perturbé par la présence de l'organe d'obturation conique et donc la direction du fluide n'est quasiment pas modifiée et reste linéaire.

Cette configuration permet ainsi de conserver une linéarité dans le déplacement du fluide et donc d'assurer une circulation de fluide qui n'est pas perturbée par la présence de l'organe d'obturation.

Lorsque l'on considère un volet plan perpendiculaire à l'axe de la vanne comprenant 5 lumières ayant chacune une plage angulaire de 36°, la section maximale d'ouverture de la vanne équivaut à 180° ce qui correspond à la moitié du canal de circulation de la vanne.

La surface d'une lumière dans un volet plan est définie par la surface S1 et la surface d'une lumière dans un volet conique tel que décrit par l'invention est définie par la surface S2. On peut ainsi déterminer que la surface S2 est égale au rapport de la surface S1 par le sinus de l'angle α (S2=S1/sin(α)). En considérant un angle α de 30°, le sinus de l'angle α est égal à 0,5. On peut donc déterminer la relation S2=S1/sin(30) et donc S2=S1^{∗}2. La surface S2 d'une lumière dans un volet conique (d'angle de 30°) est donc égale à deux fois la surface S1 d'une lumière dans un volet plan perpendiculaire à l'axe de symétrie.

Etant donné que l'ouverture des 5 lumières dans un volet plan correspond à la moitié du canal de circulation et que la surface S2 d'une lumière conique est égale à deux fois la surface S1 d'une lumière dans un volet plan, l'ouverture de 5 lumières coniques permet d'avoir la section de l'ensemble du canal de circulation de la vanne.

De préférence, ledit organe d'obturation comprend 5 lumières de passage de fluide présentant une plage angulaire de 36° et un angle α de 30°.

Avantageusement et selon l'invention, ledit actionneur comprend des moyens d'actionnement sans contact dudit organe d'obturation.

Avantageusement et selon l'invention, lesdits moyens d'actionnement sans contact dudit organe d'obturation sont des moyens électromagnétiques ou des moyens magnétiques logés à l'extérieur du canal de circulation du fluide.

Selon cette variante, lesdits moyens d'actionnement sans contact permettent le déplacement de l'organe d'obturation et donc la régulation du fluide en étant logé à l'extérieur du corps de vanne. L'actionnement de l'organe d'obturation est donc simplifié grâce à un entrainement magnétique ou électromagnétique.

L'utilisation de moyens magnétiques ou électromagnétiques sans contact permet ainsi de s'affranchir de la gestion des pertes de fluide en permettant une commande sans contact entre ledit actionneur et ledit organe d'obturation.

Selon cette variante, le positionnement de l'actionneur à l'extérieur du corps permet en outre d'éviter les fuites de fluide circulant dans le canal de circulation et donc d'améliorer l'étanchéité de ladite vanne de régulation d'un flux.

Avantageusement et selon l'invention, lesdits moyens électromagnétiques comprennent au moins un stator bobiné et ledit volet conique comprend des aimants permanents.

Selon cette variante, lesdits moyens électromagnétiques permettent par le biais d'un stator bobiné agencé sur ledit corps de vanne de piloter la rotation du volet conique équipé d'aimants permanents par le pilotage du courant alimentant ce stator bobiné.

Ainsi, l'utilisation de tels moyens électromagnétiques permet de supprimer le besoin de traversée du corps de vanne pour relier l'actionneur à l'organe d'obturation.

Les moyens électromagnétiques permettent ainsi d'éviter d'être en contact direct avec le volet conique et par conséquent d'améliorer l'étanchéité de la vanne.

Avantageusement et selon l'invention, lesdits moyens magnétiques comprennent un anneau magnétique muni d'aimants permanents s'étendant autour du corps de vanne, ledit anneau magnétique étant adapté pour être entrainé en rotation par un moteur électrique, et ledit volet conique comprend des aimants permanents adaptés pour interagir avec lesdits aimants permanents dudit anneau magnétique, permettant sa rotation.

Selon cette variante, lesdits moyens magnétiques permettent par l'intermédiaire d'un moteur électrique et d'un anneau magnétique de commander la rotation du volet sans contact entre ledit volet et lesdits moyens magnétiques.

En outre, ledit moteur électrique entraine la rotation d'un arbre qui porte une roue d'engrenage. La périphérie de l'anneau magnétique est munie de dents d'engrenage sur laquelle la roue dentée est engrenée.

L'anneau magnétique et le volet conique comprennent chacun sur leur circonférence des aimants permanents agencés symétriquement de sorte que lorsque l'anneau magnétique est entrainé en rotation par le moteur électrique cela provoque la rotation du volet par l'attraction des aimants magnétiques montés sur l'anneau et sur le volet.

Le déplacement de l'anneau magnétique par le moteur électrique permet la rotation du volet par le biais de l'attraction magnétique des aimants agencés respectivement sur l'anneau et le volet. Le déplacement du volet entraine la fermeture ou l'ouverture de l'organe d'obturation.

Selon cette variante, l'étanchéité est améliorée grâce à l'absence de contact entre lesdits moyens magnétiques et l'organe d'obturation. De plus, cette configuration permet un accès aisé aux moyens magnétiques, ce qui facilite leurs éventuelles maintenances.

Selon cette variante, ledit volet et ledit anneau présentent plusieurs aimants permanents. Le nombre d'aimants permanents peut varier selon le type de vanne. De préférence, un nombre pair d'aimants est privilégié, par exemple 2, 4 ou 6 aimants.

Selon cette variante, la configuration symétrique de l'entrainement magnétique permet en outre d'agir sur le volet comme un palier magnétique permettant ainsi d'atténuer les vibrations dudit volet lorsque la vanne est soumise à une excitation vibratoire, ce qui est le cas, par exemple pour les applications aéronautiques.

Avantageusement et selon l'invention, ladite vanne comprend en outre au moins un capteur à effet Hall sans contact permettant de mesurer une variation de champ magnétique afin d'obtenir un changement d'état du signal de fin de course.

Un tel capteur à effet Hall agencé dans le corps de vanne permet avantageusement de doter la vanne d'une fonctionnalité de détection de fin de course.

L'invention concerne également un système de conditionnement d'air d'un véhicule de transport aérien ou ferroviaire comprenant au moins une vanne de régulation d'air selon l'invention.

Les avantages d'une telle vanne de régulation selon l'invention s'appliquent *mutatis mutandis* à un système de conditionnement d'air selon l'invention.

L'invention concerne également un véhicule de transport aérien ou ferroviaire comprenant au moins un moteur propulsif, une cabine et au moins un système de conditionnement d'air de ladite cabine, caractérisé en ce que le système de conditionnement d'air de la cabine est le système de conditionnement d'air conforme à l'invention.

Les avantages d'un système de conditionnement d'air selon l'invention s'appliquent *mutatis mutandis* à un véhicule de transport aérien ou ferroviaire selon l'invention.

L'invention concerne également une vanne, un système de conditionnement d'air, un système de ventilation et un véhicule de transport aérien ou ferroviaire, caractérisés en combinaison par tout ou partie des caractéristiques mentionnées ci-dessus ou ci-après

### Liste des figures

D'autres buts, caractéristiques et avantages de l'invention apparaîtront à la lecture de la description suivante donnée à titre uniquement non limitatif et qui se réfère aux figures annexées dans lesquelles :
[Fig. 1] est une vue schématique en perspective d'une vanne selon un mode de réalisation de l'invention.
[Fig. 2a] est une vue schématique en coupe d'une vanne selon un mode de réalisation de l'invention illustrant l'organe d'obturation dans la position fermée.
[Fig. 2b] est une vue schématique en coupe d'une vanne selon un mode de réalisation de l'invention illustrant l'organe d'obturation dans la position ouverte.
[Fig. 3a] est une vue schématique en coupe de l'organe d'obturation selon un mode de réalisation de l'invention illustrant les moyens d'étanchéité dans la position fermée.
[Fig. 3b] est une vue schématique en coupe de l'organe d'obturation selon un mode de réalisation de l'invention illustrant les moyens d'étanchéité dans la position ouverte.
[Fig. 4a] est une vue schématique en coupe d'une vanne selon un mode de réalisation de l'invention illustrant l'organe d'obturation dans la position ouverte contrôlé par un actionneur électromagnétique.
[Fig. 4b] est une vue schématique en coupe transversale d'une vanne conforme à la figure 4a, illustrant le dispositif de commande d'une vanne par l'actionneur électromagnétique.
[Fig. 5a] est une vue schématique en coupe d'une vanne selon un mode de réalisation de l'invention illustrant l'organe d'obturation dans la position ouverte contrôlé par un actionneur magnétique.
[Fig. 5b] est une vue schématique en coupe transversale d'une vanne conforme à la figure 5a, illustrant le dispositif de commande d'une vanne par l'actionneur magnétique.
[Fig. 6] est une vue schématique d'un aéronef selon un mode de réalisation.

### Description détaillée d'un mode de réalisation de l'invention

Sur les figures, les échelles et les proportions ne sont pas strictement respectées et ce, à des fins d'illustration et de clarté. Dans toute la description détaillée qui suit en référence aux figures, sauf indication contraire, chaque élément de la vanne est décrit tel qu'il est agencé lorsque ledit volet conique est mobile en rotation sur un support fixe dans le corps de vanne et est contrôlé par un actionneur agencé à l'extérieur du corps de vanne.

Les termes « axial » et « radial » sont utilisés en référence à la direction axiale, définie par la direction du canal de circulation du fluide s'étendant entre l'entrée de fluide et la sortie de fluide du corps de vanne.

En outre, les éléments identiques, similaires ou analogues sont désignés par les mêmes références dans toutes les figures.

Dans toute la suite, la vanne de régulation décrite est une vanne d'un système de conditionnement d'air d'un aéronef. Cela étant, selon d'autres modes de réalisation, la vanne peut être une vanne de régulation d'un fluide autre que de l'air et peut équiper d'autres systèmes que des systèmes de conditionnement d'air.

En outre, la vanne est décrite en considérant que l'air traverse la vanne d'amont en aval de l'entrée d'air vers la sortie d'air. Cela étant, rien n'empêche d'utiliser la vanne en prévoyant de l'alimenter en air par ladite sortie d'air de sorte que l'air sort de la vanne, après avoir traversé l'organe d'obturation, par ladite entrée d'air. En d'autres termes, la vanne selon l'invention peut être utilisée de manière bidirectionnelle.

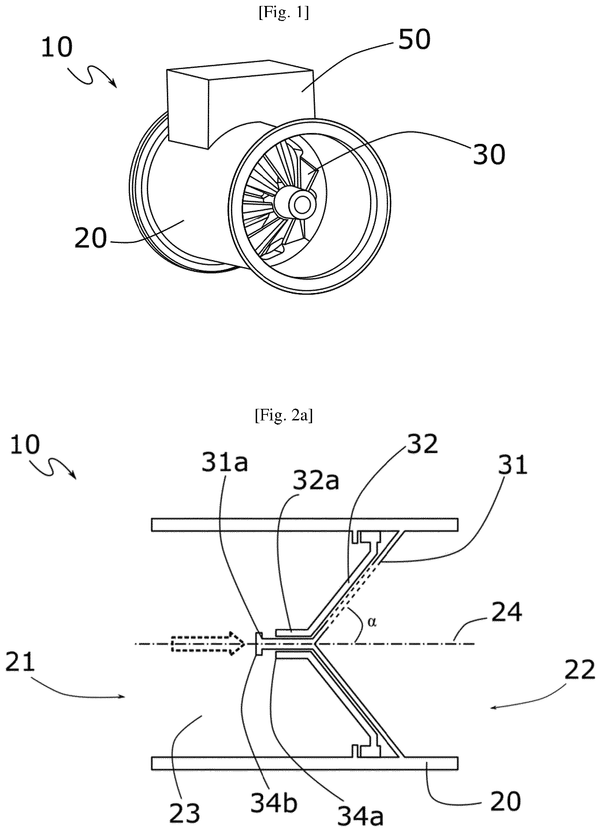

Tel que représenté sur la figure 1, une vanne 10 selon l'invention comprend un corps de vanne comprenant un carter 20, un organe d'obturation 30 et un actionneur électrique 50 de l'organe d'obturation qui est agencé à l'extérieur dudit corps de vanne.

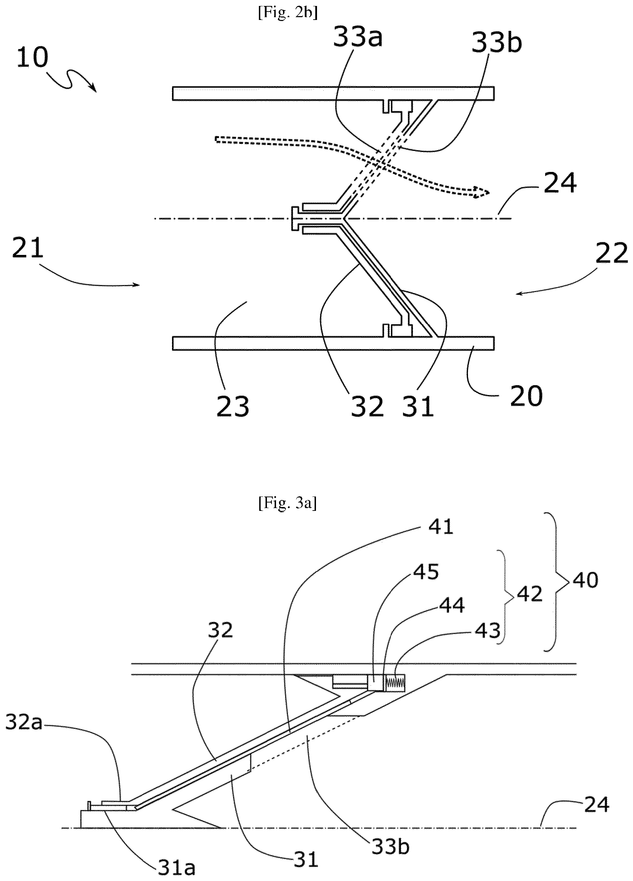

Tel qu'illustré sur les figures 2a et 2b, ladite vanne 10 comprend une entrée 21 d'air, une sortie 22 d'air, un canal 23 de circulation d'air qui s'étend entre l'entrée et la sortie d'air selon une direction axiale 24. Ledit organe d'obturation 30 s'étend selon la direction axiale 24 et est agencé dans ledit canal 23 de circulation d'air.

Comme illustré sur les figures 2a à 5b, l'organe d'obturation 30 comprend un volet 32 conique monté mobile en rotation sur un support 31 fixe conique conjugué. Le volet conique 32 comprend un sommet 32a agencé vers l'entrée d'air dans le canal de circulation. Le sommet 32a est porté par un palier 31a du support 32 fixe qui forme en outre une butée axiale. La rotation du sommet 32a du volet 32 mobile sur le palier 31a du support 31 est obtenue par exemple, par l'intermédiaire d'un roulement à billes ou d'une cage à aiguilles, non représenté sur les figures à des fins de clarté.

La circulation d'air est assurée par la présence des lumières 33a, 33b de passage d'air respectivement ménagées sur ledit volet 32 et ledit support 31. Étant donné la forme conique de l'organe d'obturation, les lumières 33a, 33b forment des sections axialo-radiales de passage d'air, qui permettent d'établir une communication fluidique entre l'entrée 21 d'air et la sortie 22 d'air de la vanne lorsqu'elles sont mises en regard l'une de l'autre par la rotation du volet 32 mobile sur le support 31 fixe.

Sur la figure 2a, l'organe d'obturation est dans la position fermée et l'air est bloqué par l'organe d'obturation par le chevauchement des parois du volet 32 sur les lumières 33b du support 31. Selon ce mode de réalisation, les parois du volet 32 peuvent être de dimension supérieure aux lumières 31b du support.

Sur la figure 2b, l'organe d'obturation est dans la position ouverte et l'air passe à travers les lumières 33a, 33b de passage d'air. Cette circulation de l'air à travers les passages d'air est schématiquement représentée par des flèches en pointillé.

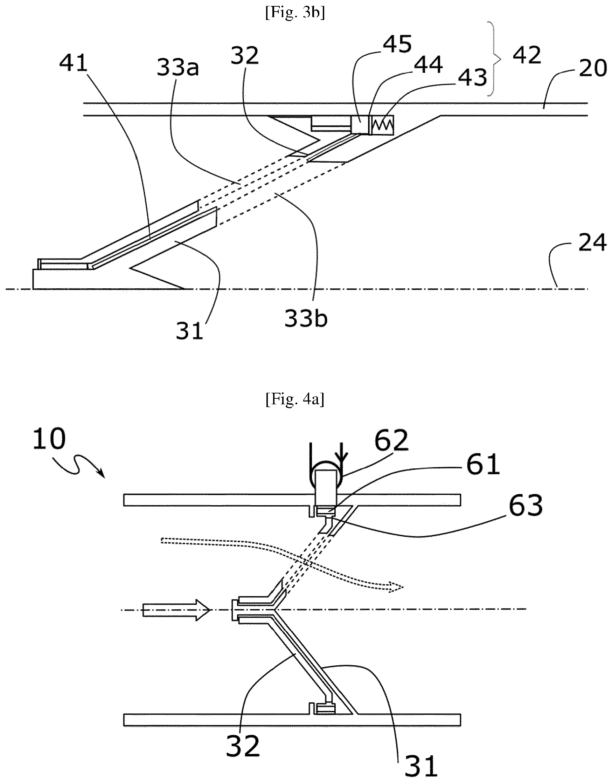

Selon un mode de réalisation et tel qu'illustré par les figures 3a et 3b, la vanne 10 comprend des moyens 40 d'étanchéité agencés entre le volet 32 et le support 31. A des fins de clarté, les moyens 40 d'étanchéité ne sont pas représentés sur les figures 2a, 2b, 4a à 5b.

Tel que représenté sur les figures 3a et 3b, un joint d'étanchéité 41 est agencé entre ledit volet 32 et le support 31 permettant d'assurer l'étanchéité sur l'ensemble de la longueur de l'organe d'obturation lorsque ce dernier est dans la position fermée. Le joint 41 s'étend du sommet de l'organe d'obturation à son extrémité distale.

Selon ce mode de réalisation, le joint 41 est fixé sur les parois du support 31 de manière à rester fixe lors de la rotation du volet. Par exemple, le joint peut être un joint siliconé adhérisé mais d'autres matériaux permettant l'étanchéité peuvent être envisagés suivant le type d'application et le type de fluide traversant l'organe d'obturation.

Lorsque l'organe d'obturation 30 est dans la position ouverte, un espacement est maintenu entre le volet 32 et le support 31 par la présence d'un ressort 43. Cet espacement correspond à un interstice permettant de favoriser la rotation du volet 32 sur le support 31 en évitant que le joint 41 fixé sur le volet conique 32 ne vienne frotter contre le support fixe 31.

Outre le joint 41 d'étanchéité, des moyens 42 de déplacement axial spontané du volet conique 32 contribuent à améliorer l'étanchéité de l'organe d'obturation.

Ces moyens 42 comprennent un ressort 43 en appui sur une rondelle d'appui 44 reposant elle-même sur un segment 45 de graphite. Ces moyens 42 sont solidarisés au volet 32 au niveau de l'extrémité distale. La rondelle d'appui 44 permet de limiter les frottements du ressort 43 sur le segment 45 de graphite. Le ressort 43 peut être comprimé lorsque l'organe d'obturation est dans la position fermée, tel que représenté sur la figure 3a. Il peut également être non comprimé et ainsi maintenir le volet 32 à distance de son support 31 lorsque l'organe d'obturation est dans la position ouverte, tel que représenté sur la figure 3b.

Tel qu'illustré sur la figure 3a, l'organe d'obturation est dans la position fermée et lesdites parois dudit volet 32 chevauchent les lumières 33b du support 31 de sorte à empêcher le passage d'air. Aussi, l'air circulant dans le canal de circulation exerce une force contre le volet 32, ce qui entraîne le déplacement axial du volet 32 vers le support fixe, en comprimant le ressort 43, et assure la compression du joint 41 d'étanchéité contre le support fixe. La raideur du ressort 43 est choisie pour permettre le déplacement axial du volet conique 32 lorsque la vanne est en position fermée.

Tel qu'illustré sur la figure 3b, l'organe d'obturation 30 est dans la position ouverte et le passage d'air à travers les lumières 33a, 33b de passage est autorisé. Dans cette position, le ressort 43 n'est pas comprimé et il forme un interstice entre le volet et le support. Le joint 41 d'étanchéité est logé dans cet interstice et n'est pas comprimé.

Lorsque l'organe d'obturation 30 passe de la position ouverte à la position fermée, la rotation du volet 32 est commandée par un actionneur 50.

Aussi, selon un mode de réalisation, l'actionnement du volet conique est assuré par le biais d'aimants permanents. Ces aimants 51 permanents sont agencés à l'extrémité distale du volet 32. Ils sont de préférence solidaires du segment 45 en graphite.

Les figures 4a à 5b illustrent de manière schématique le principe de fonctionnement d'un actionneur 50 pour commander un organe d'obturation 30 d'une vanne selon un mode de réalisation de l'invention. A des fins de clarté, les moyens 40 d'étanchéité ne sont pas représentés sur ces figures.

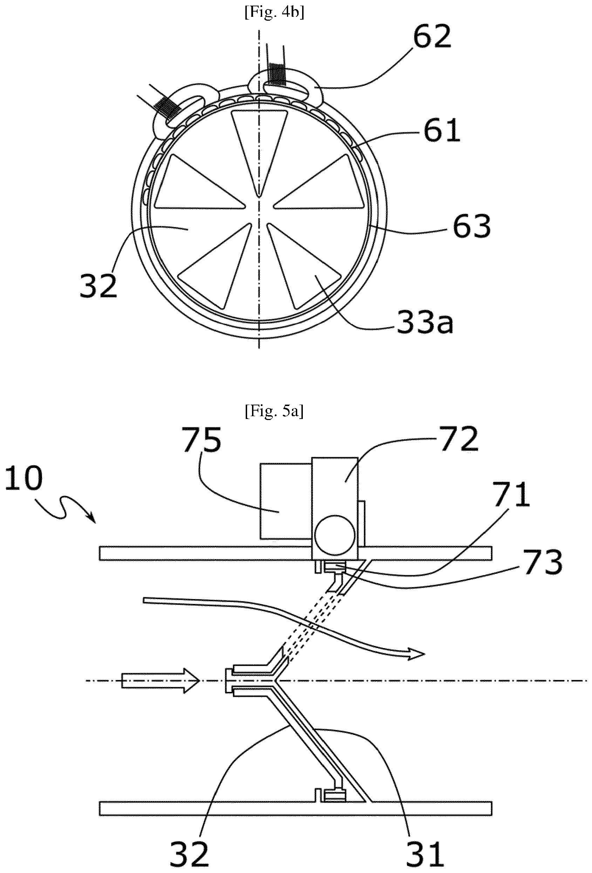

Selon le mode réalisation représenté sur les figures 4a et 4b, l'organe d'obturation est contrôlé par des moyens sans contact électromagnétiques 60 pour déplacer le volet 32 et assurer ainsi le déplacement de l'organe d'obturation 30 de la position ouverte à la position fermée et inversement.

La figure 4a illustre une vanne commandée par des moyens sans contact électromagnétiques 60 dont l'organe d'obturation 30 est dans la position ouverte autorisant la circulation d'air.

Tel que représenté sur la figure 4b, l' actionneur électromagnétique est formé de deux bobines 62 montées sur le corps de vanne à l'extérieur de la vanne. Le volet 32 comprend sur sa partie distale une culasse 63 magnétique sur laquelle des aimants 61 permanents sont montés. Ainsi, la culasse permet d'optimiser le couple induit. Les aimants 61 peuvent avoir la forme de tuiles et présenter une polarité alternée sur un arc angulaire suffisant pour réaliser la pleine ouverture de la vanne. Les deux bobines 62 réalisent les fonctions de phase A et de phase B d'un moteur de type pas à pas bipolaire et le volet 32 est utilisé en tant que volet du moteur de type pas à pas. Lorsque les bobines 62 sont traversées par un courant, les aimants 61 s'orientent selon le champ magnétique généré par les bobines 62 et entrainent le déplacement du volet 32 pour permettre l'ouverture ou la fermeture de l'organe d'obturation 30.

Selon ce mode de réalisation, les tuiles magnétiques peuvent en outre former des moyens de déplacement axial du volet conique par un vrillage magnétique des tuiles.

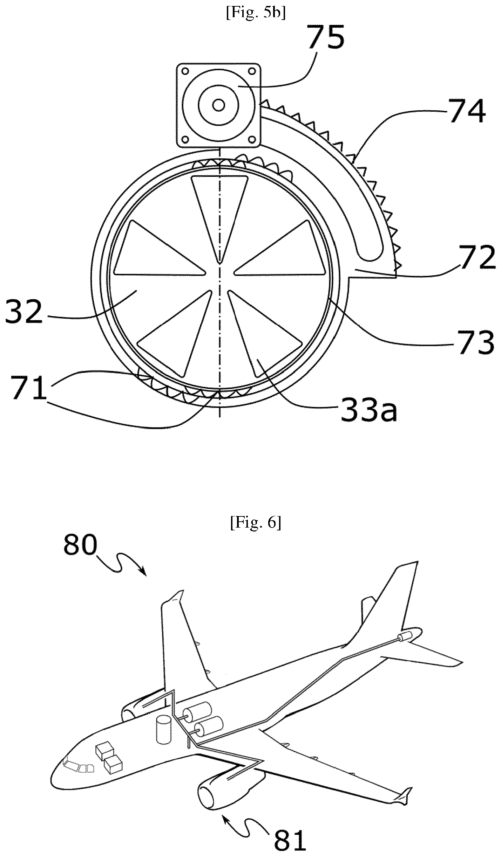

Selon un autre mode de réalisation représenté sur les figures 5a et 5b, l'actionneur est un actionneur de type magnétique 70 agencé à l'extérieur du corps de vanne 20.

La figure 5a illustre une vanne commandée par un actionneur magnétique 70 et dont l'organe d'obturation 30 est dans la position ouverte autorisant la circulation d'air.

Tel qu'illustré sur la figure 5a, l'actionneur magnétique 70 est formé d'un moteur 75 électrique comprenant un pignon engrené sur une roue dentée 74 afin de déplacer l'anneau 72 magnétique sur lequel des aimants permanents 71 sont agencés. Le volet 32 comprend sur sa partie distale une culasse 73 magnétique sur laquelle des aimants 71 permanents sont agencés. L'anneau 72 magnétique et le volet 32 comprennent respectivement quatre aimants permanents répartis symétriquement de sorte à réaliser l'entrainement par attirance magnétique entre pôle opposés des aimants. La mise en route du moteur 75 électrique entraine le déplacement de l'anneau 72 magnétique et par conséquent le déplacement des aimants 71 permanents portés par cet anneau magnétique. Ce déplacement des aimants entraine la rotation du volet 32, qui détermine donc l'ouverture et la fermeture de l'organe d'obturation.

Selon un autre mode de réalisation non représenté sur les figures, l'actionneur magnétique agencé à l'extérieur du corps de vanne peut être un moteur électrique qui entraine en rotation une vis sans fin magnétique à l'aide d'une roue dentée. Les aimants de la vis sans fin sont agencés suivant une hélice qui parcourt toute la circonférence de la vis sans fin. Le volet 32 comprend à son extrémité distale une culasse 53 magnétique sur laquelle des aimants 61 permanents sont montés.

Les aimants utilisés dans ce type d'application peuvent être des aimants samarium-cobalt permettant de résister à de hautes températures de l'ordre de 260°C.

Les différents modes de réalisation présentés ci-dessus permettent d'obtenir un entrainement sans contact par un actionneur électromagnétique ou magnétique et assurent ainsi une étanchéité optimale de la vanne.

L'invention ne se limite pas aux seuls modes de réalisation décrits. En particulier, selon un autre mode de réalisation, la commande du volet conique peut s'effectuer avec contact entre le volet et l'actionneur. Selon ce mode de réalisation, le volet est dépourvu d'aimants permanents et comprend uniquement une roue dentée entrainée directement par le pignon du moteur agencé à l'extérieur du corps de vanne. D'autres solutions sont envisageables pour assurer l'entrainement d'un volet conique sur un support fixe et former ainsi une vanne conforme à l'invention.

## Revendications

1. Vanne (10) de régulation d'un flux de fluide comprenant :
- un corps (20) de vanne comprenant une entrée (21) de fluide, une sortie (22) de fluide, un canal (23) de circulation de fluide qui s'étend selon une direction, dite direction axiale (24) entre ladite entrée (21) et ladite sortie (22) de fluide,
- un organe d'obturation (30) agencé dans ledit canal de circulation de fluide et configuré pour pouvoir passer d'une position ouverte autorisant la circulation de fluide dans ledit canal (23) de circulation entre l'entrée (21) de fluide et la sortie (22) de fluide ou inversement, à une position fermée empêchant la circulation de fluide dans le canal de circulation entre l'entrée (21) de fluide et la sortie (22) de fluide ou inversement,
- un actionneur (50) dudit organe d'obturation adapté pour pouvoir commander la position dudit organe d'obturation (30) dans ledit canal de circulation de fluide,
- un support (31) fixe conique solidaire du corps (20) de vanne et présentant un sommet (34b) orienté vers ladite entrée (21) de fluide dudit corps de vanne,
- un volet (32) conique conjugué mobile en rotation par rapport au support (31) fixe et présentant un sommet (34a) orienté vers ladite entrée (21) de fluide dudit corps de vanne,
- au moins une lumière (33a) de passage de fluide agencée dans ledit volet (32) conique et au moins une lumière (33b) de passage de fluide conjuguée agencée dans ledit support (31) fixe de manière à permettre la circulation de fluide à travers ledit organe d'obturation (30) lorsque lesdites lumières (33a, 33b) sont en regard l'une de l'autre et définissant ladite position ouverte, et
- un joint (41) d'étanchéité agencé axialement entre ledit volet conique (32) et ledit support (31) fixe conique,
**caractérisée en ce que** ledit organe d'obturation comprend :
- des moyens (42) de déplacement axial spontané du volet (32) conique contre le support fixe qui comprennent au moins un ressort (43) configuré pour permettre de maintenir le volet conique à distance du support fixe lorsque ledit organe d'obturation est dans ladite position ouverte ou dans une position intermédiaire et d'être comprimé lorsque ledit organe d'obturation est dans ladite position fermée de manière à permettre un déplacement axial dudit volet (32) qui comprime ledit joint d'étanchéité.

2. Vanne de régulation d'un flux de fluide selon la revendication 1 **caractérisée en ce que** ledit volet (32) conique et ledit support (31) fixe comprennent chacun respectivement un nombre impair de lumières (33a, 33b) de passage de fluide régulièrement réparties.

3. Vanne de régulation d'un flux de fluide selon l'une des revendications 1 ou 2, **caractérisée en ce qu'**elle présente en outre au moins un axe de symétrie qui s'étend le long de la direction axiale (24) à partir dudit sommet du support fixe et un angle α définissant une inclinaison desdites lumières (33a, 33b) du volet (32) conique et du support (31) fixe par rapport audit axe de symétrie de la vanne, ledit angle α étant inférieur ou égal à 30°.

4. Vanne de régulation d'un flux de fluide selon l'une des revendications 1 à 3 **caractérisée en ce que** ledit actionneur (50) comprend des moyens d'actionnement sans contact dudit organe d'obturation.

5. Vanne de régulation d'un flux de fluide selon la revendication 4 **caractérisée en ce que** lesdits moyens d'actionnement sans contact dudit organe d'obturation comprennent des moyens électromagnétiques (60) ou des moyens magnétiques (70) logés à l'extérieur du canal (23) de circulation du fluide.

6. Vanne de régulation d'un flux de fluide selon la revendication 5 **caractérisée en ce que** lesdits moyens électromagnétiques (60) comprennent au moins un stator bobiné (62) et ledit volet conique comprend des aimants (61) permanents.

7. Vanne de régulation d'un flux de fluide selon la revendication 5 **caractérisée en ce que** lesdits moyens magnétiques (70) comprennent un moteur (75) électrique monté sur un anneau (72) magnétique muni d'aimants (71) et ledit volet conique comprend des aimants (71).

8. Système de conditionnement d'air d'un véhicule de transport aérien (80) ou ferroviaire comprenant au moins une vanne (10) de régulation d'air, **caractérisé en ce que** ladite vanne est une vanne selon l'une quelconque des revendications 1 à 7.

9. Véhicule de transport aérien (80) ou ferroviaire comprenant au moins un moteur propulsif (81), une cabine et au moins un système de conditionnement d'air de ladite cabine, **caractérisé en ce que** le système de conditionnement d'air de la cabine est le système de conditionnement d'air selon la revendication 8.

## Patentansprüche

1. Ventil (10) zur Steuerung eines Fluidstroms, welches umfasst:
einen Ventilkörper (20), der einen Fluideinlass (21), einen Fluidauslass (22) und einen Fluidzirkulationskanal (23) umfasst, der sich in einer Richtung, die axiale Richtung (24) genannt wird, zwischen dem Fluideinlass (21) und dem Fluidauslass (22) erstreckt,
ein Verschlusselement (30), das in dem Fluidzirkulationskanal angeordnet und ausgestaltet ist, von einer offenen Position, die es dem Fluid ermöglicht, in dem Zirkulationskanal (23) zwischen dem Fluideinlass (21) und dem Fluidauslass (22) zu zirkulieren, oder umgekehrt, in eine geschlossene Position überzugehen, die verhindert, dass das Fluid in dem Zirkulationskanal zwischen dem Fluideinlass (21) und dem Fluidauslass (22) zirkuliert, oder umgekehrt;
ein Betätigungselement (50) des Verschlusselements, das angepasst ist, die Position des Verschlusselements (30) in dem Fluidzirkulationskanal zu steuern;
einen festen konischen Träger (31), der mit dem Ventilkörper (20) fest verbunden ist und eine Spitze (34b) aufweist, die zum Fluideinlass (21) des Ventilkörpers gerichtet ist,
eine konjugierte konische Klappe (32), die relativ zu dem festen Träger (31) drehbar ist und eine Spitze (34a) aufweist, die auf den Fluideinlass (21) des Ventilkörpers ausgerichtet ist,
mindestens eine Fluiddurchgangsöffnung (33a), die in der konischen Klappe (32) angeordnet ist, und mindestens eine konjugierte Fluiddurchgangsöffnung (33b), die in der festen Halterung (31) angeordnet ist, so dass Fluid durch die Verschlusskomponente (30) zirkulieren kann, wenn die Öffnungen (33a, 33b) einander gegenüberliegen und die offene Position definieren, und
eine Dichtung (41), die axial zwischen der konischen Klappe (32) und dem festen konischen Träger (31) angeordnet ist,
**dadurch gekennzeichnet, dass** das Verschlusselement umfasst:
Mittel (42) zur spontanen axialen Bewegung der konischen Klappe (32) gegen den festen Träger, wobei diese Mittel mindestens eine Feder (43) umfassen, die ausgestaltet ist, es zu ermöglichen, die konische Klappe von dem festen Träger fernzuhalten, wenn sich das Verschlusselement in der offenen Position oder in einer Zwischenposition befindet, und zusammengedrückt zu werden, wenn sich das Verschlusselement in der geschlossenen Position befindet, um eine axiale Bewegung der Klappe (32) zu ermöglichen, die die Dichtung zusammendrückt.

2. Fluidstromregelventil nach Anspruch 1, **dadurch gekennzeichnet, dass** die konische Klappe (32) und der feste Träger (31) jeweils eine ungerade Anzahl gleichmäßig verteilter Fluiddurchgangsöffnungen (33a, 33b) aufweisen.

3. Fluidstromregelventil nach Anspruch 1 oder 2, **dadurch gekennzeichnet, dass** es zudem mindestens eine Symmetrieachse aufweist, die sich entlang der axialen Richtung (24) von der Spitze des festen Trägers aus erstreckt, und einen Winkel a, der eine Neigung der Öffnungen (33a, 33b) der konischen Klappe (32) und des Trägers (31) definiert, die relativ zu der Symmetrieachse des Ventils befestigt sind, wobei der Winkel α kleiner oder gleich 30° ist.

4. Fluidstromregelventil nach einem der Ansprüche 1 bis 3, **dadurch gekennzeichnet, dass** das Betätigungselement (50) ein berührungsloses Betätigungsmittel für das Verschlusselement umfasst.

5. Fluidstromregelventil nach Anspruch 4, **dadurch gekennzeichnet, dass** die berührungslosen Betätigungsmittel des Verschlusselements elektromagnetische Mittel (60) oder magnetische Mittel (70) umfassen, die außerhalb des Fluidzirkulationskanals (23) untergebracht sind.

6. Fluidstromregelventil nach Anspruch 5, **dadurch gekennzeichnet, dass** die elektromagnetischen Mittel (60) mindestens eine Statorwicklung (62) umfassen und die konische Klappe Permanentmagnete (61) umfasst.

7. Fluidstromregelventil nach Anspruch 5, **dadurch gekennzeichnet, dass** die magnetischen Mittel (70) einen Elektromotor (75) umfassen, der auf einem mit Magneten (71) versehenen Magnetring (72) befestigt ist, und dass die konische Klappe Magnete (71) umfasst.

8. Klimaanlage für ein Luft- oder Schienenfahrzeug (80) mit mindestens einem Luftregelventil (10), **dadurch gekennzeichnet, dass** das Ventil ein Ventil nach einem der Ansprüche 1 bis 7 ist.

9. Luft- oder Schienenfahrzeug (80) mit mindestens einem Antriebsmotor (81), einer Kabine und mindestens einer Klimaanlage für die Kabine, **dadurch gekennzeichnet, dass** die Klimaanlage für die Kabine die Klimaanlage nach Anspruch 8 ist.

## Claims

1. Valve (10) for controlling a fluid flow comprising:
- a valve body (20) comprising a fluid inlet (21), a fluid outlet (22), a fluid circulation channel (23), which extends in a direction, called axial direction (24), between said fluid inlet (21) and said fluid outlet (22),
- a shutter component (30) arranged in said fluid circulation channel and configured to be able to transition from an open position allowing fluid to circulate in said circulation channel (23) between the fluid inlet (21) and the fluid outlet (22) or vice versa, to a closed position preventing fluid from circulating in the circulation channel between the fluid inlet (21) and the fluid outlet (22) or vice versa,
- an actuator (50) of said shutter component adapted to be able to control the position of said shutter component (30) in said fluid circulation channel,
- a fixed conical support (31) integral with the valve body (20) and having a tip (34b) oriented towards said fluid inlet (21) of said valve body,
- a conjugate conical flap (32) rotationally movable relative to the fixed support (31) and having a tip (34a) oriented towards said fluid inlet (21) of said valve body,
- at least one fluid passage aperture (33a) arranged in said conical flap (32) and at least one conjugate fluid passage aperture (33b) arranged in said fixed support (31) so as to allow fluid to circulate through said shutter component (30) when said apertures (33a, 33b) are opposite one another and defining said open position, and
- a gasket seal (41) axially arranged between said conical flap (32) and said fixed conical support (31),
**characterized in that** said shutter component comprises:
- means (42) for spontaneous axial movement of the conical flap (32) against the fixed support, which means comprise at least one spring (43) configured to allow the conical flap to be kept away from the fixed support when said shutter component is in said open position or in an intermediate position and to be compressed when said shutter component is in said closed position, so as to allow axial movement of said flap (32) that compresses said gasket seal.

2. Fluid flow control valve according to claim 1, **characterized in that** said conical flap (32) and said fixed support (31) each respectively comprise an odd number of evenly distributed fluid passage apertures (33a, 33b).

3. Fluid flow control valve according to either claim 1 or claim 2, **characterized in that** it further has at least one axis of symmetry that extends along the axial direction (24) from said tip of the fixed support and an angle α defining an incline of said apertures (33a, 33b) of the conical flap (32) and of the support (31) fastened relative to said axis of symmetry of the valve, said angle α being less than or equal to 30°.

4. Fluid flow control valve according to any one of claims 1 to 3, **characterized in that** said actuator (50) comprises contactless actuation means of said shutter component.

5. Fluid flow control valve according to claim 4, **characterized in that** said contactless actuation means of said shutter component comprise electromagnetic means (60) or magnetic means (70) housed outside the fluid circulation channel (23).

6. Fluid flow control valve according to claim 5, **characterized in that** said electromagnetic means (60) comprise at least one stator winding (62) and said conical flap comprises permanent magnets (61).

7. Fluid flow control valve according to claim 5, **characterized in that** said magnetic means (70) comprise an electric motor (75) mounted on a magnetic ring (72) provided with magnets (71) and said conical flap comprises magnets (71).

8. Air-conditioning system for an air or rail transport vehicle (80) comprising at least one air control valve (10), **characterized in that** said valve is a valve according to any one of claims 1 to 7.

9. Air or rail transport vehicle (80) comprising at least one propulsion engine (81), a cabin and at least one air-conditioning system for said cabin, **characterized in that** the air-conditioning system for the cabin is the air-conditioning system according to claim 8.
